(19) Europäisches Patentamt
European Patent Office
Office européen des brevets

(11) Veröffentlichungsnummer: **0 212 633**
**A2**

(12) # EUROPÄISCHE PATENTANMELDUNG

(21) Anmeldenummer: **86111545.9**

(22) Anmeldetag: **20.08.86**

(51) Int. Cl.⁴: **C 09 D 5/44**

(30) Priorität: **23.08.85 DE 3530179**

(43) Veröffentlichungstag der Anmeldung: **04.03.87 Patentblatt 87/10**

(84) Benannte Vertragsstaaten: **DE FR GB IT SE**

(71) Anmelder: **Herberts Gesellschaft mit beschränkter Haftung, Christbusch 25, D-5600 Wuppertal 2 (DE)**

(72) Erfinder: **Saatweber, Dietrich, Forststrasse 22, D-5600 Wuppertal 21 (DE)**
Erfinder: **Klein, Klausjörg, Richard-Strauss-Allee 33, D-5600 Wuppertal 2 (DE)**
Erfinder: **Jaeger, Kurt Edgar, Ravensberger Strasse 9, D-5600 Wuppertal 1 (DE)**

(74) Vertreter: **Türk, Dietmar, Dr. rer. nat. et al, Türk, Gille + Hrabal Patentanwälte Bruckner Strasse 20, D-4000 Düsseldorf 13 (DE)**

(54) **Kathodisch abscheidbares wässriges Elektrotauchlack-überzugsmittel.**

(57) Kathodisch abscheidbares wässriges Elektrotauchlack-Überzugsmittel, das als Kunstharz-Bindemittel enthält

(A) 50 bis 95% Massenanteil, bezogen auf den Gesamtanteil des Kunstharz-Bindemittels, von einem oder mehreren Polykondensations-, Polymerisations- und/oder Polyadditionsharzen, wobei das Harz oder im Falle des Vorliegens mehrerer Harze deren Gemisch

a) ein mittleres Molekulargewicht (Mn) von 700 bis 10 000 hat,

b) $1.2 \cdot 10^{23}$ bis $21.7 \cdot 10^{23}$ seiten- oder endständige Doppelbindungen pro 1000 g enthält, entsprechend einer Hydrierjodzahl von 5 bis 90,

c) primäre und/oder sekundäre Hydroxylgruppen enthält, entsprechend einer Hydroxylzahl von 30 bis 450, und

d) eine Aminzahl von 30 bis 150 aufweist,

(B) 5 bis 50% Massenanteil eines oder mehrerer Vernetzungsmittel, die Michael-Additionsprodukte von zur Michael-Addition befähigten Mono- oder Dicarbonsäureester an Verbindungen sind, welche mindestens eine zur Michael-Addition befähigte Doppelbindung enthalten, und die pro Molekül im Mittel

a) entweder mindestens eine umesterungs- bzw. umamidierungsfähige Estergruppe und mindestens eine ethylenische Doppelbindung oder

b) mindestens zwei umesterungs- bzw. umamidierungsfähige Estergruppen enthält, und

(C) lösliche und/oder unlösliche Umesterungskatalysatoren für die thermische Vernetzung von (A) und (B) bei Temperaturen über 100 °C.

Die Erfindung betrifft auch die Verwendung des Überzugsmittels zur kathodischen Abscheidung aus einem Lackbad auf elektrisch leitenden Oberflächen.

EP 0 212 633 A2

Anmelder: Herberts Gesellschaft mit beschränkter Haftung, Christbusch 25, D-5600 Wuppertal 2

# Kathodisch abscheidbares wäßriges Elektrotauchlack-Überzugsmittel

Die Vorteile der kathodischen Elektrotauchlackierung (KTL) sind in der Fachliteratur und in Patentschriften beschrieben ( Metalloberfläche 31 (1977) 10, Seite 455-459, EP-A-4090, AT-C-346 989, US-A-3 922253, EP-B-66 859).

Ein Nachteil der beschriebenen Systeme ist die Anwendung relativ hoher Einbrenntemperaturen von ca. 170°C, wodurch ein hoher Aufwand an Heizenergie benötigt wird. In der Autoindustrie, die der Hauptanwender des KTL-Verfahrens ist, werden durch diese hohen Einbrenntemperaturen der Einbau von Kunststoffteilen in die Autokarosserien vor der Grundierung verhindert und z.T. die Schmelztemperaturen von Lötverbindungen erreicht.

Daher bemühen sich die Anbieter von KTL-Systemen solche Materialien herstellen zu können, mit welchen bei niedrigeren Einbrenntemperaturen (low bake) die bisherigen guten Eigenschaften der Grundierungen nicht verschlechtert werden.

In der US-A-4435 559 werden β-Hydroxyurethane als Vernetzungsmittel für KTL-Systeme mit niedriger Einbrenntemperatur genannt. Bei 250°F (121°C) wird eine als "appreciable" bezeichnete Härtung erreicht (Spalte 6,

Zeile 12-13). Erst bei 325°F (163°C) ist die Härtung "excellent" und damit brauchbar für Autokarossen. Ein weiterer Nachteil ist der Umgang mit großen Mengen giftiger Isocyanate bei der Herstellung dieser Lacksysteme.

In EP-A-125 577 wird die Härtung bei niedrigeren Einbrenntemperaturen durch Kombination von Oniumgruppen enthaltenden Polymeren mit speziellen Aminoharzen erreicht, allerdings unter Verschlechterung der Korrosionsschutzeigenschaften.

Für die Ansprüche der Autoindustrie unzureichende Korrosionsschutzergebnisse werden bei Einbrenntemperaturen unter 160°C auch mit den Systemen aus DE-A-32 46 812 und DE-A-33 28 455 erzielt.

DE-A-32 46 812 beschreibt härtbare, kationische Modifizierungsprodukte von Epoxidharzen, welche β-Hydroxyalkylcarbamidestergruppen enthalten, während DE-A-33 28 455 von Aminosäure-Salzaddukten mit urethanisierten Aminogruppen ausgeht.

In DE-A-33 24 211 und DE-A-33 15 469 werden Michael-Additionsprodukte von zur Michael-Addition befähigten Mono- oder Dicarbonsäureestern an Verbindungen, die zur Michael-Addition befähigte Doppelbindungen enthalten, zur Vernetzung mit hydroxylgruppenhaltigen Kunstharzen, z.B. mit KTL-Trägerharzen, kombiniert.

Als Einbrennbedingungen werden 130-200°C über eine Zeitdauer von 10 bis 60 Minuten, bevorzugt 150-180°C während 15 bis 30 Minuten genannt. In den Beispielen liegen die Einbrenntemperaturen zwischen 150 und 200°C. Unterhalb 150°C eingebrannte Beschichtungen von 16-18 µm Schichtdicke erfüllen nicht die Ansprüche der Autoindustrie z.B.

hinsichtlich guter mechanischer Eigenschaften, ausreichender Belastungsdauer in der Salzsprühkammer nach ASTM B 117/6 oder DIN 50 021 und guter Freibewitterungsresistenz.

Es ist die Aufgabe der Erfindung, diese Nachteile des Standes der Technik zu vermeiden, was überraschenderweise dadurch gelingt, daß man ein Elektrotauchlack-Überzugsmittel der nachfolgend definierten Zusammensetzung verwendet.

Gegenstand der Erfindung ist ein kathodisch abscheidbares wäßriges Elektrotauchlack-Überzugsmittel, das ein oder mehrere Kunstharz-Bindemittel mit Aminogruppen enthält, welche durch Protonisieren mit Säuren wasserlöslich gemacht werden können, und das ggf. Pigmente, Korrosionsinhibitoren, Antikratermittel, Lackhilfsmittel, Katalysatoren und organische Lösungsmittel enthält, dadurch gekennzeichnet, daß es als Kunstharz-Bindemittel enthält

A) 50 bis 95 % Massenanteil, bezogen auf den Gesamtanteil des Kunstharz-Bindemittels, von einem oder mehreren Polykondensations-, Polymerisations- und/oder Polyadditionsharzen, wobei das Harz oder im Falle des Vorliegens mehrerer Harze deren Gemisch

a) ein mittleres Molekulargewicht ($\overline{Mn}$) von 700 bis 10 000 hat,

b) $1.2 \cdot 10^{23}$ bis $21.7 \cdot 10^{23}$ seiten- oder endständige Doppelbindungen pro 1000 g enthält, entsprechend einer Hydrierjodzahl von 5 bis 90,

c) primäre und/oder sekundäre Hydroxylgruppen enthält, entsprechend einer Hydroxylzahl von 30 bis 450, und

d) eine Aminzahl von 30 bis 150 aufweist,

B) 5 bis 50 % Massenanteil eines oder mehrerer Vernetzungsmittel, die Michael- Additionsprodukte von zur Michael- Addition befähigten Mono- oder Dicarbonsäureester an Verbindungen sind, welche mindestens eine zur Michael- Addition befähigte Doppelbindung enthalten, und die pro Molekül im Mittel

a) entweder mindestens eine umesterungs- bzw. umamidierungsfähige Estergruppe und mindestens eine ethylenische Doppelbindung oder

b) mindestens zwei umesterungs- bzw. umamidierungsfähige Estergruppen enthält, und

C) lösliche und/oder unlösliche Umesterungskatalysatoren für die thermische Vernetzung von (A) und (B) bei Temperaturen über 100°C.

Die Komponenten A), B) und/oder C) können sowohl als Kaltmischungen als auch als Prekondensate, d.h. durch Erwärmen der Mischungen auf 40 bis 200°C, angewendet werden.

Es ist natürlich auch möglich, das Michael-Additionsprodukt aus $\alpha$, $\beta$-ungesättigter Mono- oder Dicarbonsäure und zur Michael-Addition befähigtem Mono- oder Dicarbonsäureester unmittelbar an das Kunstharzmolekül, Komponente (A), zu binden, wodurch selbsthärtende Kunstharze entstehen.

Die Kombination (A), (B) und (C) unterscheidet sich von der Zusammensetzung der Komponenten in EP-B-66 859 im

wesentlichen durch die Komponente (B). Statt des Vernetzers mit β-Hydroxyestergruppen werden Michael-Additionsprodukte von CH-aciden, enolisierbaren Carbonsäureestern verwendet, wie sie in DE-A-33 15 469 beschrieben werden. Diese Vernetzungsmittel sollen die Härtung bei unterhalb etwa 180°C (DE-A-33 15 469, Seite 2, Zeile 5) ermöglichen. Es war deshalb nicht vorauszusehen, daß in der erfindungsgemäßen Kombination dieser Vernetzer mit KTL-Bindemitteln, welche durch einen bestimmten Anteil an end- oder seitenständigen Doppelbindungen einen bestimmten Ungesättigtheitsgrad haben, die Senkung der Einbrenntemperatur auf 120°C ohne Einbuße der gewünschten Beschichtungsqualität möglich ist. Außerdem wurde der Ablauf verschiedener Reaktionsmechanismen, die in dem erfindungsgemäßen Elektrotauchlack-Überzugsmittel enthalten sind, während des Niedrig-Temperatur-Einbrennens als ungünstig für den Verlauf angesehen. Die eingebrannten Beschichtungen weisen jedoch eine glatte, einwandfreie Oberfläche auf.

Das ungesättigte, hydroxylgruppenhaltige Amino-Kunstharz (Komponente A) wird bevorzugt aus 1,2-Di- oder Polyepoxiden hergestellt, wie z.B. in DE-A-27 32 902 und EP-B-66 859 beschrieben wird. Es hat vorzugsweise ein mittleres Molekulargewicht ($\bar{M}n$) von 1500 bis 5000. Diesen Molekulargewichten entsprechen Viskositäten von etwa 0,5 bis 6,0 Pas nach Verdünnen mit 2-Ethoxyethanol auf 50 % Massenanteil bei 25°C. Das geeignete mittlere Molekulargewicht bzw. die Viskosität kann auch dadurch erhalten werden, daß Harze mit höherer und niedrigerer Viskosität vermischt werden.

Das Bindemittel der Komponente (A) enthält mindestens eine Aminogruppe pro Molekül. Die untere Grenze der Aminozahl sollte bevorzugt bei 40, die obere Grenze sollte bevorzugt bei 90 liegen. Ist die Aminzahl zu niedrig, so

ist die Löslichkeit zu gering oder es entstehen durch einen zu hohen Neutralisationsgrad zu niedrige pH-Werte in den Abscheidungsbädern. Ist die Aminzahl zu hoch, so entsteht eine schlechte haftende Filmbildung bei der Abscheidung oder eine blasige Oberfläche. Die Bindemittel der Komponente (A) können solche sein, die im wesentlichen keine Carboxylgruppen aufweisen.

Als Polyadditions- und Polymerisationsharze kommen Amino-1,2-Epoxidharze in Betracht. Sie können hergestellt werden durch

a) Einführen von Glycidylgruppen in alkalischem Medium über z.B. Epichlorhydrin,
  - aa) in aliphatische, cycloaliphatische oder aromatische OH-funktionelle Harze, z.B. Epoxynovolake, unter Bildung von Polyglycidylethern,
  - ab) in aliphatische, cycloaliphatische oder aromatische COOH-funktionelle Harze unter Bildung von Polyglycidylestern, oder
  - ac) in aliphatische, cycloaliphatische oder aromatische $NH_2$-funktionelle Harze unter Bildung von Polyglycidylaminen,

b) Einpolymerisieren von ungesättigten Glycidylmonomeren wie Glycidyl(meth)acrylat, N-Glycidyl(meth)acrylamid oder Allylglycidylether in Acrylcopolymerisate.

Besonders bevorzugt gemäß a) ist, daß die 1,2-epoxidgruppenhaltigen Harze Polyglycidylether der allgemeinen Formel sind

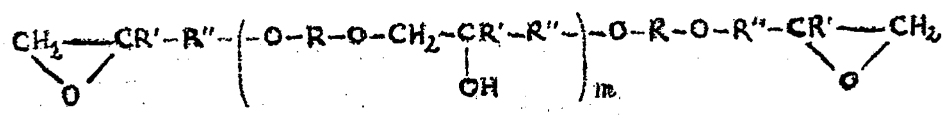

worin bedeuten

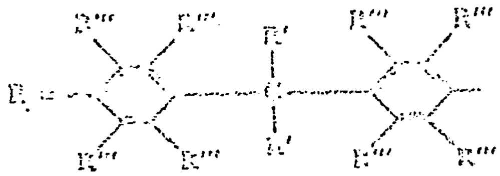

R' = Wasserstoff oder $-C_nH_{2n+1}$
R'' = $-(CR'_2)_n-$
R'''= R' oder Halogen, bevorzugt Wasserstoff
m = 0 bis 6
n = 1 bis 3

Sie haben ein mittleres Molekulargewicht ($\overline{Mn}$) von 300 bis 2000 und ein Epoxidäquivalentgewicht von etwa 170 bis 1500.

Solche Harze sind Umsetzungsprodukte von Epichlorhydrin mit Dioxi-diphenylmethan (Bisphenol F) oder Dioxi-diphenylpropan (Bisphenol A). Polyepoxide mit geeignetem Molekulargewicht werden entweder durch Auswahl der Reaktionsbedingungen bei der Umsetzung des Bisphenols mit Epichlorhydrin oder durch Umsetzung der monomeren Diglycidylverbindung mit weiterem Bisphenol oder mit langkettigen Polyalkoholen wie Hexandiol-1,6, Polytetrahydrofurandiol, Polycaprolactondiol, Polycaprolactamdiol oder Polybutadiendiol in Gegenwart von geeigneten basischen oder sauren Katalysatoren wie Borfluorid-Komplexen hergestellt. Es können auch entsprechende heterocyclische Polyepoxyverbindungen verwendet werden wie 1,3-Diglycidyl-5,5-dimethylhydantoin, Triglycidylisocyanurat oder Diepoxyde aus Bisimiden.

Bevorzugt gemäß b) ist, daß die epoxygruppenhaltigen Harze Glycidyl(meth)acrylat-Copolymere sind, die durch

Copolymerisation von Glycidylmethacrylat mit ungesättigten Monomeren erhalten wurden. Ungesättigte Monomere sind Styrol, Vinyltoluol, (Meth)acrylsäureester verschiedener Kettenlänge, wobei die Methacrylsäureester bevorzugt lineare oder verzweigte $C_1$-$C_4$-Alkohole und die Acrylsäureester bevorzugt lineare oder verzweigte $C_2$-$C_8$-Alkohole enthalten. Die Einführung der Aminogruppen kann entweder durch Copolymerisation mit ungesättigten Aminen wie Dialkyl-aminoalkyl-(meth)acrylaten, entsprechenden Acrylamiden oder N-Vinylimidazol, oder durch Reaktion von vorzugsweise sekundären Aminen oder Aminoalkoholen mit den Epoxygruppen erfolgen.

Das Einführen der Aminogruppen in die Komponente (A) erfolgt entweder durch Addition von NH-reaktiven Verbindungen an die Epoxygruppe oder durch Umsetzung der Hydroxylgruppen des Grundharzes mit basischen Monoisocyanaten, die durch Reaktion von aromatischen und/oder aliphatischen und/oder cycloaliphatischen Di- oder Polyisocyanaten mit einem Dialkylaminoalkanol (vgl. DE-A-2 707 405) entstehen.

Als NH-reaktive Verbindungen werden verwendet primäre Monoalkylamine wie Dialkylaminoalkylamin und/oder bevorzugt sekundäre Monoamine wie Dialkylamine, Monoalkylhydroxyalkylamine oder Dihydroxyalkylamine. Beispiele für einsetzbare Verbindungen sind Diethylamin, Dimethylaminopropylamin, N-Methylaminoethanol oder Diethanolamin. Bei Verwendung von primären Aminen oder sekundären Diaminen tritt eine Kettenverlängerung ein, z.B. bei Einsatz von Additionsprodukten von Hexandiamin-1,6 mit 2 mol Glycidylester der Versaticsäure. Als sekundäre Diamine, bevorzugt langkettige Diamine, können auch Alkyldiamino-alkane oder Umsetzungsprodukte von gesättigten Glycidylethern mit primären Diamino-alkanen verwendet werden. Die geeignete Hydroxylgruppenzahl entsteht dabei einmal automatisch

aus der Epoxygruppe bei der Addition der sekundären Aminogruppen, zum anderen kann sie durch Einsatz von Hydroxylalkylaminen gesteuert werden.

Die Molverhältnisse zwischen epoxy- und aminogruppenhaltigen Verbindungen sind so zu wählen, daß vollständiger Einbau des Amins gewährleistet ist, weil durchbruchartige Oberflächenstörungen beim elektrophoretischen Beschichten auftreten können, d.h. ein geringfügiger Überschuß an Epoxygruppen ist vorteilhaft. Die Reaktion der Amine beginnt schon bei Raumtemperatur und ist im allgemeinen exotherm. Um eine vollständige Umsetzung zu erreichen, ist es in der Regel notwendig, die Temperatur zeitweise auf etwa 50 bis 120°C zu erhöhen.

Das 1,2-epoxidgruppenhaltige Harz wird vor Zugabe des Amins in organischen Lösemitteln wie Xylol, Methylisobutylketon, 2-Ethoxyethanol, Ethoxypropanol, Diethylenglykoldimethylether oder Diacetonalkohol gelöst. Störende Lösungsmittel oder Lösungsmittelanteile können vor dem weiteren Verdünnen, ggf. unter Vakuum, abdestilliert werden.
Zum Entfernen von Aminresten ist ggf. ein Dünnschichtverdampfer oder eine Wasserdampfdestillation geeignet.

Das Einführen der end- oder seitenständigen Doppelbindungen in die Komponente (A) erfolgt entweder direkt durch Addition an die Epoxygruppen oder indirekt durch Umsetzung der Hydroxylgruppe des Grundharzes mit ungesättigten Monoisocyanaten, die durch Reaktion von aromatischen und/oder aliphatischen und/oder cycloaliphatischen Di- oder Polyisocyanaten mit $\alpha,\beta$-ungesättigten Monocarbonsäuren oder entsprechenden Carbonsäureamiden, wie Hydroxyalkyl-(meth)-acrylaten oder Dicarbonsäureestern von Hydroxyalkyl(meth)-acrylaten erhalten werden, wie sie in der DE-A-2 707 482 beschrieben werden. Es werden dabei Verbindungen ausgewählt,

die aufgrund ihrer Struktur im Molekülverband weitgehend thermisch stabile Urethangruppen ergeben. Die direkte Addition an die Epoxygruppe kann beispielsweise mit Allylamin, Diallylamin, Acrylsäure oder Methacrylsäure erfolgen.

Als Kettenverlängerungsmittel können

Addukte von ungesättigten Monoepoxyverbindungen an Di- oder Polyaminen mit mindestens zwei primären Aminogruppen oder mindestens einer primären und einer sekundären Aminogruppe verwendet werden, wie Hexandiamin-1,6, 3-Amino-methylaminopropylamin, Diethylentriamin, Trimethylhexamethylendiamin und Isophorondiamin, entsprechend der Formel

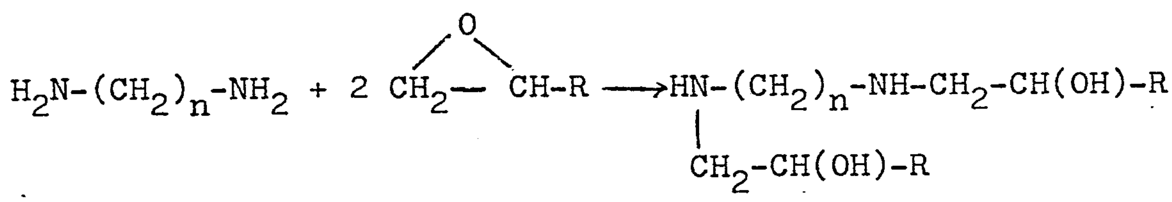

R. = 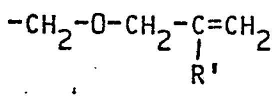

oder 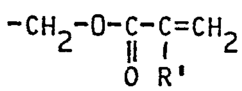

R' = H oder Alkyl

Die Aminogruppen der Polyamine werden dabei etwa stöchiometrisch mit so viel ungesättigten Monoepoxid-Verbindungen bei Temperaturen von etwa 50 bis 105°C umgesetzt, daß ein Molekül mit zwei reaktiven sekundären Aminogruppen entsteht, das als Kettenverlängerungsmittel mit weiterem Polyepoxid reagiert.

. Bei Verwendung von drei reaktiven Stellen werden Verzweigungen eingebaut. Eine Kettenverlängerung kann auch durch Einbau von ungesättigt substituierten primären Aminen wie primäres Allylamin erfolgen.

Eine andere Herstellungsweise ist die Umetherung mit einem veretherten methylolierten (Meth)acrylamid, z.B. Methylolacrylamid-monobutylether, wie sie in der DE-A-2 934 467 beschrieben ist. Die Einführung ungesättigter Doppelbindungen kann auch auf gleiche Weise durch Umsetzung mit ungesättigten Formaldehyd-Kondensationsharzen wie Phenolplasten oder Aminoplasten erreicht werden. Geeignete Phenolharze sind z.B. Reaktionsprodukte von ein- und/oder mehrkernigen, gegebenenfalls alkylsubstituierten Phenolen mit Formaldehyd- oder Formaldehyd liefernden Verbindungen wie Paraformaldehyd. Die Methylolgruppen können teilweise oder voll verethert sein mit Methanol, Ethanol, Propanol, Butanol und/oder ungesättigten Monoalkoholen wie Allylalkohol, Hydroxylalkyl(meth)acrylaten.

Veretherte Phenolharze können auch durch Reaktion mit ungesättigten Monoepoxiden wie Glycidylallylethern oder Glycidylmethacrylat hergestellt werden. Eine weitere Modifizierung ermöglicht die Umsetzung mit

(Meth)acrylsäure,

Besonders geeignet sind

niedrigmolekulare ungesättigte Phenolether wie die Polymethylolverbindungen vom Phenolallylether (Methylonharz® 75108 der General Electric). Ungesättigte Aminoplaste können durch Reaktion der methylolierten Melamin-, Benzoguanamin- oder Harnstoffharze mit ungesättigten Monoalkoholen oder Monocarbonsäuren erhalten werden.

Das ungesättigte Amin-epoxidharz der Komponente (A) kann gegebenenfalls durch Einsatz entsprechender gesättigter Verbindungen modifiziert werden, um optimale technische Eigenschaften zu erzielen. Für die Erfindung ist es jedoch wesentlich, daß für die unterschiedlich ablaufenden Vernetzungsreaktionen sowohl end- oder seitenständige Doppelbindungen als auch Hydroxylgruppen vorhanden sind. So liegt die untere Grenze der Hydroxylzahl besonders über 80, ganz besonders über 120, die obere Grenze dagegen besonders unter 400, ganz besonders unter 350. Die untere Grenze der Hydrierjodzahl liegt besonders über 10, die obere Grenze dagegen besonders unter 75, ganz besonders unter 60. Da beim Einführen von Aminogruppen und ungesättigten Verbindungen die Zahl der Hydroxylgruppen verringert werden kann, muß dieser Effekt bei der Zusammensetzung der Komponente (A) berücksichtigt werden. Um geeignete optimale Eigenschaften zu erzielen, ist es möglich, ein Gemisch von ungesättigten Amin-epoxidharz mit gesättigtem Amin-epoxidharz zu verwenden. Geeignete gesättigte hydroxylgruppenhaltige Amin-epoxidharze werden in der EP- B- 12 453 beschrieben. Auch solche Gemische müssen die oben angegebenen Kennzahlen für Molekulargewicht, Hydroxylzahl, Hydrierjodzahl und Aminzahl haben.

Die für den Vernetzungsprozeß wichtigen primären und/oder sekundären Hydroxygruppen können anteilweise durch primäre und/oder sekundäre Aminogruppen ersetzt werden. Solche Harze werden hergestellt durch stöchiometrische Umsetzung

der Epoxygruppen mit amingruppenhaltigen Ketiminen und/oder Aldiminen oder auch durch Reaktion mit überschüssigem Ethylendiamin und Abdestillieren des Aminüberschusses. Solche Herstellungsverfahren werden in der EP-A- 25 554 ausführlicher beschrieben. Ist die Zahl der umesterungs- oder umamidierungsfähigen Gruppen zu klein, so ist die Vernetzung nach dem Einbrennen ungenügend und der Film wird in organischen Lösemitteln zu gut löslich. Ist ihre Zahl zu hoch, so kann eine Versprödung des Films eintreten.

Bei Anwesenheit primärer und sekundärer Aminogruppen im Bindemittel ist darauf zu achten, daß nur solche end- oder seitenständigen Doppelbindungen im System vorhanden sind, die zwar im Sinne der Erfindung reaktiv sind, d.h. während des Einbrennens vernetzen, wie z.B. Doppelbindungen gemäß der Formel

$$-\underset{\substack{|\\ R}}{C} = CH_2$$

wobei $R = C_nH_{2n+1}$,

die gegenüber primären und sekundären Aminen jedoch nicht besonders aktiviert sind.

Als Polykondensationsharze können z.B. Umsetzungsprodukte aus multifunktionellen Aminen mit multifunktionellen Carbonsäuren (Polyaminoamide) verwendet werden, die entweder Hydroxylgruppen enthalten, z.B. durch Mitverwendung von Oxycarbonsäuren oder geeigneten Alkanolaminen während der Herstellung, oder ohne Hydroxylgruppen im Gemisch mit hydroxylgruppenhaltigen Bindemitteln eingesetzt werden.

Eine weitere Polykondensationsharzgruppe sind Polyester, die unter den Anwendungsbedingungen verseifungsstabil sind.

Aminogruppen können durch geeignete Alkanolamine oder Aminosäuren, aber auch über Reaktionsprodukte von multifunktionellen Isocyanaten mit Alkanolaminen, die nach der Umsetzung noch über freie Isocyanatgruppen verfügen, in die Polyester- und Polyaminoamidharze eingeführt werden. Reaktionsprodukte solcher Art aus Isocyanaten und Dialkanolaminen sind z.B. in DE-A-27 32 955 beschrieben worden.

Das für die Umsetzung mit Komponente (A) notwendige Vernetzungsmittel, Komponente (B), ist ein Michael-Additionsprodukt eines zur Michael-Addition befähigten Mono- oder Dicarbonsäureesters an eine Verbindung, die mindestens eine zur Michael-Addition befähigte Doppelbindung enthält.

Das Michael-Additionsprodukt enthält pro Molekül im Mittel entweder mindestens eine umesterungs- bzw. umamidierungsfähige Estergruppe und eine Doppelbindung, oder es enthält pro Molekül im Mittel mindestens zwei umesterungs- bzw. umamidierungsfähige Estergruppen.

Die Herstellung der gesättigten Michael-Additionsprodukte ist in DE-A- 3315 469 ausführlich beschrieben. Durch geeignete Auswahl der Reaktionspartneranteile können aber auch Doppelbindungen enthaltende Produkte mit Estergruppen hergestellt werden.

In Kombination mit den Vernetzungsmitteln der Komponente (B) können auch andere Vernetzungsmittel, die für kathodisch abscheidbare Systeme brauchbar sind, verwendet werden, z.B. blockierte Isocyanate oder β-Hydroxyestergruppen enthaltende Polyester gemäß EP-B-66 859. Dadurch ist es möglich, ohne wesentliche Verschlechterung der Reaktivität gewisse Eigenschaften zu verbessern, z.B. Pigmentbenetzung oder Aussehen der Filmoberfläche.

Als Umesterungskatalysatoren, Komponente (C), werden 0.1 bis 10 % Massenanteile, bevorzugt 2 bis 6 %, bezogen auf Gesamtanteil Komponente (A) und Komponente (B), Metalloxide, Metallsalze oder Metallkomplexverbindungen von ein- oder mehrwertigen Metallen verwendet. Beispiele für geeignete Katalysatoren sind Bleioctoat, Bleisilikat, Bleinaphthenat, Zink-Verbindungen nach DE-C-28 07 698, z.B. Alcophor® 827 von Henkel, und DE-A-33 06 064, Zink- und Zink-Bleiverbindungen der Nitrophthalsäure (Sicorin® der BASF), Komplexverbindung aus Zinkoxid und 8-Hydroxychinolin (auch "in-situ" anwendbar), Antimontrioxid, Cobaltnaphthenat, Cadmium-acetyl-acetonat, Thallium-dicyclopentadien, Triethanolamin-titanal oder Dibutylzinndilaurat. Wasserlösliche Metallverbindungen sind ebenfalls als Umesterungskatalysatoren geeignet, wenn das Metall als Verbindung oder Komplex in fein verteilter Form mit dem Lack abgeschieden wird. In vielen Fällen ist eine Kombination von zwei oder mehreren Umesterungskatalysatoren vorteilhaft.

Die Metalloxide, Metallsalze oder Metallkomplexverbindungen können lediglich kalt zugemischt oder mit den Bindemitteln auf 40 bis 250°C, gegebenenfalls unter Inertgas, erwärmt werden.

Für die Wirkung von Octoaten und Naphthenaten kann es vorteilhaft sein, die Lösungsmittel der Lieferform, z.B. aliphatische und/oder aromatische Kohlenwasserstoffe, abzudampfen, z.B. bei 120°C, und die Metallsalze warm oder gelöst in vorwiegend wasserverdünnbaren Lösungsmittel zuzugeben, die gut mit dem Bindemittel oder mit dem Bindemittelgemisch verträglich sind.

Durch Protonisieren mit Säuren wird das kationische Kunstharz-Bindemittel in an sich bekannter Weise wasserlöslich gemacht. Beispiele für Säuren sind Salzsäure,

Ameisensäure, Essigsäure, Milchsäure, Zitronensäure, Malonsäure, Acrylsäure, Phosphorsäure oder Alkylphosphorsäure. Es muß mindestens so viel Säure zugegeben werden, daß eine stabile Dispergierung des kationischen Kunstharz-Bindemittels erfolgt. Ein Überschuß an Säure, d.h. ein Neutralisationsgrad über 100 % ist zweckmäßig zu vermeiden.

Für das erfindungsgemäße Elektrotauchlack-Überzugsmittel können ggf. alle für KTL verwendbare Pigmente benutzt werden, z.B. Titandioxid, Aluminiumsilikat, Magnesiumsilikat, Siliciumdioxid, Titandioxid-Glimmer (Iriodin® von Merck), Zinkphosphat, Aluminiumbronzen, Bleichromat, Bleisilikochromat (z.B. Oncor® von Kronos), Eisenoxidpigment, Bleimolybdat, Azopigmente, Küpenpigmente, Phthalocyaninpigmente, Ruß.

Nichtionische Bindemittel wie z.B. Weichmacher (Dibutylphthalat und andere Phthalsäureester), Weichmacherharze, Cumaron-Inden-Harze, Inden-Harze, Kohlenwasserstoffharze können, soweit sie sich über Erst- und Nachfüllmaterial in das KTL-Bad einemulgieren lassen, zur Verbesserung spezieller Eigenschaften zugesetzt werden.

Das Überzugsmittel kann zusätzlich übliche lacktechnische Zusatzstoffe wie Katalysatoren, Verlaufmittel, Antikratermittel, Antischaummittel usw. enthalten. Naturgemäß sind solche Zusatzstoffe auszuwählen, die mit Wasser bei saurem bis neutralem pH-Wert keine störenden Reaktionen eingehen, keine störenden Fremdionen einschleppen und bei längerem Stehen nicht in nichtaufrührbarer Form ausfallen, d.h. auch nach längerem Stehen muß sich das Überzugsmittel durch Rühren in eine brauchbare Dispersion überführen lassen.

Das Elektrotauchlack-Bad kann bis zu ungefähr 10 % Massenanteil organische Lösungsmittel enthalten. Es wird ein möglichst niedriger Gehalt an organischen Lösungsmitteln angestrebt, besonders unter 2 %. Als Lösemittel dienen u.a. Alkohole, Glykolether, Propylenglykolether, Ketoalkohole ggf. unter Zusatz von aliphatischen und aromatischen Kohlenwasserstoffen verschiedener Kettenlänge. Ester werden ggf. je nach dem Grad ihrer Verseifbarkeit für Tauchbecken mit schnellerem Umsatz (turnover) eingesetzt.

Der Feststoffgehalt des Überzugsmittels gemäß der Erfindung beträgt durch Verdünnen mit Wasser zweckmäßig 5 bis 30 % Massenanteile, vorzugsweise 10 bis 20 %. Der pH-Wert des Lackes liegt im allgemeinen zwischen etwa 5,0 und 7,5, vorzugsweise zwischen 5,8 und 6,5. Liegt der pH-Wert zu niedrig, so treten Dispergierschwierigkeiten auf und das Harz fällt aus. Liegt er zu hoch, so tritt eine verstärkte Elektrolyse auf, die die Oberfläche verschlechtert.

Die elektrophoretische Abscheidung erfolgt zweckmäßig frühestens 24 Stunden nach Herstellung des Bades. Während dieser Zeit wird zweckmäßig kontinuierlich gerührt, um eine gleichmäßige Verteilung zu erreichen. Als Anode werden elektrisch leitfähige, nicht korrodierende Elektroden, z.B. aus nichtrostendem Stahl oder Graphit verwendet. Der kathodisch zu beschichtende Gegenstand und die Anode werden, wie für KTL bekannt, in ein wäßriges Bad getaucht. Es können alle metallisch leitenden Werkstücke beschichtet werden, z.B. Kupfer, Aluminium, Zinn, Zink, Eisen und Legierungen dieser Metalle. Während der Abscheidung wird das Bad bei Temperaturen von zweckmäßig etwa 15 bis 35°C gehalten. Festkörper, Abscheidetemperatur und -zeit, sowie Spannung werden so gewählt, daß die gewünschte Schichtstärke nach Abspülen mit Wasser und Einbrennen erhalten

0 212 633

wird. Beim Anlegen eines elektrischen Stomes mit einer Spannung von zweckmäßig 50 bis 500 Volt zwischen metallisch leitendem Werkstück und einer Gegenelektrode wird das wasserlösliche Trägerharz an den Kathoden koaguliert. Es transportiert hierbei das wasserunlösliche Vernetzungsmittel, Pigmente usw. mit. Hierbei kann sich das Verhältnis von Pigment zum Kunstharzbindemittel im abgeschiedenen Film zugunsten des Pigments verschieben. Gleichzeitig werden Wasser und die zur Neutralisation verwendete Säure im Bad angereichert. Zum Nachfüllen müssen daher konzentrierte Lacke verwendet werden, die diese Verschiebungen durch Änderung der Mengenverhältnisse ausgleichen. Diese Korrektur kann auch durch geeignete apparative Einrichtungen, z.B. Elektrodialyseverfahren erfolgen.

Die Vernetzung des Lackfilms erfolgt durch Einbrennen bei Temperaturen von 120 bis 150°C über eine Zeitdauer von 15 bis 60 Minuten.

Selbstverständlich führt die Anwendung höherer Temperaturen, z.B. 150 bis 200°C, auch zu guten Ergebnissen.

Beispiele :

Die Prozentangaben beziehen sich auf Massenanteile.

Für die Beispiele verwendete Bindemittel, Vernetzungsmittel und Antikratermittel:

A 1) Ungesättigtes Bindemittel

528 g eines Epoxidharzes auf Basis Bisphenol A mit einem Epoxidäquivalentgewicht von 490 (Epikote® 1001) werden in 224 g Methoxypropanol gelöst. Bei 60°C werden 38.3 g Diethanolamin zugegeben und das

Reaktionsgemisch gehalten, bis 1.33 Millimol (Epoxid und Amin) pro Gramm Lösung titriert werden.
Danach wird ein Gemisch von 18.6 g Dimethylaminopropylamin und 11.6 g eines Additionsproduktes aus 1 mol Hexandiamin - 1,6 und 2 mol Glycidylester der Versaticsäure (Cardura® E 10 von Shell) zugegeben und die exotherme Reaktion abgewartet. Anschließend wird eine Stunde bei 90°C und 3 Stunden bei 120°C gehalten. Mit 31.5 g Methoxypropanol wird auf einen Festkörpergehalt, bestimmt durch 40 Minuten Einbrennen bei 180°C, von 70 % verdünnt. Nach Abkühlen auf 100°C werden 2.9 g Bleioctoat (Bleigehalt 31 %), 2.9 g 4-Methyl -2,6- ditert. -butylphenol und 80 g Methylolacrylamidmonobutylether zugemischt und ansteigend von 100 bis 120°C, zum Schluß unter Anlegen eines leichten Vakuums, 40 g Lösungsmittel abdestilliert.
Anschließend wird mit Methoxypropanol auf 65 % Festkörpergehalt verdünnt.

| | |
|---|---|
| Aminzahl | 87 mg KOH/g Festharz |
| Hydrierjodzahl | 12 (Festharz). |

A 2) <u>Ungesättigtes Bindemittel</u>

Gemäß DE-B-27 32 902, Spalte 9, Beispiel A2) werden 2262 g Bisphenol A - Epoxidharz mit Epoxidäquivalentgewicht 260 in 2023 Ethylglykolacetat bei 60 bis 70°C gelöst und nach Zugabe von 0.8 Hydrochinon und 2453 g eines Halbesters aus Tetrahydrophthalsäureanhydrid und Hydroxyethylmethacrylat auf 100 bis 110°C erwärmt. Die Temperatur von 100 bis 110°C wird so lange gehalten, bis die Säurezahl unter 3 mg KOH/g gesunken ist.
Dann wird das Reaktionsgut bei 60 bis 70°C mit 3262 g einer 70%-igen Lösung eines Monoisocyanates aus Toluylendiisocyanat und Dimethylethanolamin (Molverhältnis 1 : 1) in Ethylglykolacetat bis zu einem NCO-Wert von praktisch Null umgesetzt.

Festkörpergehalt 70 %

Hydrierjodzahl 30.6.

A 3) <u>Gesättigtes Bindemittel</u>

391 g Diethanolamin, 189 g 3-(N,N-dimethylamino)-propylamin und 1147 g eines Adduktes aus Hexandiamin-1,6 und Cardura® E 10 (Molverhältnis 1 : 2) werden, wie auch in der EP-B-12 463, Seite 8, Beispiel I(b) beschrieben, zu 5273 g Bisphenol A - Epoxidharz (Epoxidäquivalentgewicht 472) in 3000 g 2-Ethoxyethanol gegeben.
Das Reaktionsgemisch wird 4 Stunden unter Rühren bei 85 bis 90°C und dann eine Stunde bei 120°C gehalten.
Anschließend wird mit 2-Ethoxyethanol auf 60 % Festkörpergehalt verdünnt.

A 4) <u>Ungesättigtes Bindemittelgemisch</u>

1030 g Bindemittel »A 3« werden unter Zusatz von 170g 2-Ethoxyethanol auf 80°C erwärmt und mit 800 g Methylonharz® 75 108, einem Phenylallylether - Formaldehydharz der General Electric, vermischt.
Anschließend wird auf 120°C erhitzt und diese Temperatur zwei Stunden gehalten.
Das entstehende "Prekondensat" wird zusätzlich mit 1982 g Bindemittel »A 3« und 497 g 2-Ethoxyethanol gemischt.

Festkörpergehalt (40 Minuten bei 150°C eingebrannt) : 63 %.

A 5) <u>Ungesättigtes Bindemittelgemisch</u>

800 g Bindemittel »A 2« und 1200 g Bindemittel »A 3« werden 30 Minuten durch gutes Rühren vermischt.

| | |
|---|---|
| Festkörpergehalt | 64 % |
| Hydroxylzahl | 136 mg KOH/g Harz |
| Hydrierjodzahl | 19 |
| Epoxidäquivalentgewicht | > 10 000 |

A 6) Gesättigtes Bindemittel mit primären Aminogruppen

Gemäß EP-A- 102 566, Seite 11, Beispiel I B werden 911 g Epikote 828, 320 g Polycaprolactondiol PCP 0200 und 73 g Xylol unter Stickstoff auf 210°C erwärmt. Die Reaktion wird zur Entfernung von Feuchtigkeitswasser eine halbe Stunde unter Rückfluß mit Wasserabscheider gehalten.
Das Reaktionsgemisch wird auf 155°C gekühlt und mit 282 g Bisphenol A versetzt. Nach einer halben Stunde ist Bisphenol A gelöst.
Danach werden bei 150°C 2 g Benzyldimethylamin zugegeben. Die Temperatur steigt durch Exothermie auf 180°C. Nach Kühlen auf 130°C werden 4.3 g Benzyldimethylamin zugegeben. Das Reaktionsgemisch wird auf 130°C gehalten bis eine Probe nach Zugabe von 2-Ethoxyethanol auf 50 % Festkörper verdünnt eine Gardner-Holdt-Viskosität von P-Q hat.
99 g Diketimin aus Diethylentriamin und Methylisobutylketon (Molverhältnis 1 : 2) sowie 70 g N-Methylethanolamin werden zugegeben.
Die Temperatur des Reaktionsgemisches wird auf 110°C gebracht und eine Stunde gehalten.
Schließlich werden 784 g Butanol-2 (statt Methylisobutylketon und n-Butanol) zum Reaktionsgemisch gegeben.

Festkörpergehalt : 62 %

B 1) Gesättigtes Vernetzungsmittel

Gemäß DE-A- 33 15 469, Seite 11, Beispiel 5, werden 287 g Hydroxyethylacrylat, 217.5 g Toluylendiisocyanat, 56.1 g Diethylenglykoldimethylether und 0.5 g Zinkacetylacetonat 6 Stunden auf 60°C erhitzt, bis der Isocyanatanteil weniger als 0.2 % beträgt.

Darauf wird das Reaktionsgemisch mit 1.2 g Kalilauge (30%-ig in Methanol) und 248.2 g Malonsäuredimethylester (statt Acetessigsäureethylester) versetzt und 5 Stunden auf 120°C erhitzt.
Anschließend wird mit 2-Ethoxyethanol auf 80 % Festkörpergehalt verdünnt.

B 2) Gesättigtes Vernetzungsmittel

Herstellung analog B 1) mit 301 g Malonsäurediethylester statt des Dimethylesters.

B 3) Ungesättigtes Vernetzungsmittel

471 g Hydroxyethylacrylat, 0.8 g Zinkacetylacetonat und 92 g Diethylenglykoldimethylether werden vorgelegt, auf 60°C erwärmt, 357 g Toluylendiisocyanat langsam zugetropft und so lange bei 60°C gehalten, bis der Gehalt an -N=C=0 Gruppen kleiner als 0.2 % ist.
Anschließend werden 3.3 g Hydrochinon und 92 g 2-Ethoxyethanol zugegeben.
Nach Zugabe von 10 g Kalilauge (30%-ig in Methanol) wird das Reaktionsgemisch auf 80°C erwärmt und 113 g Cyanessigsäureethylester tropfenweise zugefügt, so daß 80°C nicht überschritten wird.
80°C wird so lange gehalten, bis der Gehalt an Doppelbindungen auf -C=C- = 4.2 % abgefallen ist (das ist die Hälfte der ursprünglich vorhandenen Doppelbindungen).
Die Reaktionsmischung wird auf 80 % Festkörpergehalt mit Ethoxypropanol verdünnt.

B 4) Vernetzungsmittel

gemäß EP-B-12 463, Seite 8, Beispiel II (a).

C 1) <u>Umesterungskatalysator</u>

22 g Bleioctoat, 72 %-ig in Lackbenzin, Bleigehalt 31 %, werden auf einem Blechdeckel von 165 mm Durchmesser gut verteilt und über Nacht offen stehen gelassen.
Anschließend wird im Trockenofen 1 Stunde bei 120°C ein Teil des restlichen Lösungsmittels abgedampft.
Der Rückstand wird warm mit 11 g 2-Ethoxyethanol vermischt zum Ansatz von Beispiel 7 gegeben, wobei noch eine Nachspülung mit 11 g 2-Ethoxyethanol erfolgt.

C 2) <u>Umesterungskatalysator</u>

100 g Bleioctoat wie für C 1) werden durch Vakuumdestillation bei 120°C auf 94 % Festkörpergehalt gebracht und anschließend mit 2-Isopropoxyethanol auf 72 % Festkörpergehalt verdünnt.

<u>Beispiel 1</u>

Zu 116 g Bindemittel »A 1« werden 31 g Vernetzungsmittel »B 1« , 7.2 g Bleioctoat (Bleigehalt 31 %) und 45.8 g 2-Ethoxyethanol unter Rühren gegeben.
Die Mischung wird auf zinkphosphatierten Stahlblechen (Bonder ® 132) mit Hilfe eines Rakels so aufgezogen, daß die Trockenfilmdicke 19 - 21 µm beträgt.
Die bei verschiedenen Temperaturen (110 bis 140°C) gehärteten Beschichtungen werden einer Methylethylketon-(MEK-)Beständigkeit und einer Erichsen-Tiefung unterzogen.

Die Ergebnisse dieser Prüfung sind in Tabelle 1 angegeben und zeigen, daß ausreichende Vernetzung noch bei 120°C zu erreichen ist.

<u>Beispiel 2</u>

Versuchsdurchführung analog Beispiel 1.
Anstelle von Vernetzungsmittel »B 1« werden 31 g Vernetzungsmittel »B 2« eingesetzt.

## Beispiel 3

Versuchsdurchführung analog Beispiel 1. Statt Vernetzungsmittel »B 1« werden 31 g Vernetzungsmittel »B 3« eingesetzt.

## Beispiel 4

564 g Bindemittel »A 1« werden unter einem schnell laufenden Dissolver mit 1.5 g Ruß, 145 g Titandioxid, 33 g 2-Butoxyethanol, 33 g 2,2,4-Trimethylpentandiol-1,3-monoisobutyrat, 21 g Bleioctoat (Bleigehalt 31 %) vermischt und auf einer Perlmühle vermahlen.
Mit 159 g Vernetzungsmittel »B 1« wird der Ansatz komplettiert.
Zur Herstellung eines KTL-Bades wird mit 20.5 g Ameisensäure, 50%-ig in Wasser, neutralisiert und mit 2323 g voll entsalztem Wasser verdünnt.

Badwerte:

| | |
|---|---|
| Festkörpergehalt (30 Minuten bei 180°C einbrennen) | 18.8 % |
| pH-Wert (20°) | 5.4 |
| $MEQ_s$-Wert | 50 mmol Säure/100g Festharz |
| Leitfähigkeit | 1650 $\mu S \cdot cm^{-1}$ |

Aus dem KTL-Bad werden Lackfilme bei einer Badtemperatur von 33°C mit einer Spannung von 150 bis 180 V zwei Minuten auf zinkphosphatierte Stahlbleche abgeschieden (Bonder® 132), mit Wasser gespült und bei verschiedenen Temperaturen (110 bis 130°C) gehärtet.
Die Beschichtungen mit Trockenfilmdicke 16 bis 18 µm werden mechanischen Prüfungen und einer MEK-Beständigkeitsprüfung unterzogen.
Die Ergebnisse sind in Tabelle 2 angegeben.

Vergleichsversuch 1

Bindemittel »A 1« wird durch ein gesättigtes Bindemittel, welches primäre Aminogruppen enthält, ersetzt.

Unter Verwendung von 591 g Bindemittel »A 6« (statt »A 1« ) und Zugabe von 2253 g voll entsalztem Wasser (statt 2323 g) wird analog Beispiel 4 verfahren.

Badwerte:

| | |
|---|---|
| Festkörpergehalt | 19 % |
| pH-Wert (20°C) | 5.9 |
| $MEQ_s$-Wert | 48 mmol Säure/100 g Festharz |
| Leitfähigkeit | 1880 µS . $cm^{-1}$ |

In Tabelle 2 wird gezeigt, daß die MEK-Beständigkeit bei niedrigen Einbrenntemperaturen unzureichend ist.

Beispiel 5

Versuchsdurchführung analog Beispiel 4 mit Umesterungskatalysator C 1) statt Bleioctoat.

Badwerte:

| | |
|---|---|
| Festkörpergehalt | 18.1 % |
| pH-Wert (20°C) | 5.4 |
| $MEQ_s$-Wert | 50 mmol Säure/100 g Festharz |
| Leitfähigkeit | 1650 µS . $cm^{-1}$ |

Prüfungsergebnisse sind in Tabelle 2 angegeben.

Beispiel 6

Aus 312 g Bindemittel »A 2« , 297 g Bindemittel »A 6« , 45 g Ethoxypropanol, 1.5 g Ruß und 145 g Titandioxid wird analog Beispiel 4 eine Vermahlung mit Perlmühle durchgeführt.

Mit der Mahlpaste und 159 g Vernetzungsmittel »B 1« , 22 g Bleioctoat (Bleigehalt 31 %), 20.5 g Ameisensäure, 50%-ig, und 2998 g voll entsalztem Wasser wird ein KTL-Bad hergestellt.

Badwerte:

| | |
|---|---|
| Festkörpergehalt | 16.3 % |
| pH-Wert (20°C) | 5.1 |
| $MEQ_s$-Wert | 48 mmol Säure/100 g Festharz |
| Leitfähigkeit | 1860 µS . $cm^{-1}$ |

Die Beschichtung von zinkphosphatierten Stahlblechen wird wie im Beispiel 4 vorgenommen. Die Aushärtung erfolgt 60 Minuten bei 150°C. Die Trockenfilmdicke beträgt 16 bis 18 µm.
Die Prüfungsergebnisse sind in Tabelle 2 angegeben.

Beispiel 7

Aus dem nach Beispiel 4 angesetzten KTL-Bad werden Lackfilme auf zinkphosphatierten Stahlblechen bei einer Badtemperatur von 35°C mit einer Spannung von 230 V zwei Minuten abgeschieden, mit Wasser gespült und 30 Minuten bei 145°C gehärtet.
Die Prüfergebnisse der Lackfilme mit Trockenfilmdicke 43 bis 45 µm sind in Tabelle 2 angegeben.

Beispiel 8

Aus 280 g Bindemittel »A 3« , 200 g Bindemittel »A 2« , 20 g Sicorin® RZ, einem Zink-Nitrophthalsäure-Salz der BASF, 141 g Titandioxid, 17 g Aluminiumsilikat und 1.5 g Ruß wird analog Beispiel 4 eine Vermahlung mit Perlmühle durchgeführt.
Mit der Mahlpaste und 70 g Vernetzungsmittel »B 2«, 10 g Vernetzungsmittel »B 4« , 15 g Eisessig und 2244.5 g voll entsalztem Wasser wird ein KTL-Bad hergestellt.

Badwerte:

| | |
|---|---|
| Festkörpergehalt | 17.4 % |
| pH-Wert (20°C) | 6.0 |
| $MEQ_s$-Wert | 47 mmol Säure/100 g Festharz |
| Leitfähigkeit | 1890 µS . $cm^{-1}$ |

Aus dem KTL-Bad werden zinkphosphatierte und nicht vorbehandelte Stahlbleche bei 33°C Badtemperatur mit 240 bis 260 V zwei Minuten beschichtet, mit Wasser gespült und 30 Minuten bei 150°C eingebrannt. Die Schichtdicke beträgt 16 bis 18 µm. Die Beschichtungen sind glatt, hart und elastisch.
Die Salzsprühtestergebnisse sind in Tabelle 3 angegeben.

<u>Beispiel 9</u>

600 g Bindemittel »A 4« werden mit 13 g Ruß und 111 g Aluminiumsilikat in einer Perlmühle vermahlen.
Nach weiterem Einrühren von 243 g Bindemittel »A 4« , 28 g Umesterungskatalysator »C 2«, 23 g Vernetzungsmittel »B 4«, 123 g Vernetzungsmittel »B 1« und 29 g Ameisensäure (50%-ig in Wasser) wird mit 3830 g voll entsalztem Wasser unter gutem Rühren verdünnt.

Badwerte:

| | |
|---|---|
| Festkörpergehalt | 14.8 % |
| pH-Wert (20°C) | 5.7 |
| $MEQ_s$-Wert | 50 mmol Säure/100 g Festharz |
| Leitfähigkeit | 1720 µS · $cm^{-1}$ |

Aus dem KTL-Bad werden Lackfilme auf zinkphosphatierten und nicht vorbehandelten Stahlblechen abgeschieden, mit Wasser gespült und 60 Minuten bei 140°C gehärtet.
Die Trockenfilmdicke beträgt 16 bis 18 µm.
Die Lackfilme sind glatt, hart und elastisch.
Die Salzsprühtestergebnisse sind in Tabelle 3 angegeben.

Beispiel 10

Aus 339 g Bindemittel »A 5« , 54 g 2-Butoxyethanol, 21 g Bleioctoat (Bleigehalt 31 %), 8 g Ruß, 90 g Aluminiumsilikat und 12 g Bleisilikat wird analog Beispiel 9 eine Vermahlung mit Perlmühle durchgeführt.
Durch weiteres Einrühren von 496 g Bindemittel »A 5«, 124 g Vernetzungsmittel »B 1« , 25 g Vernetzungsmittel »B 4« , 23 g Eisessig und 3854 g voll entsalztem Wasser wird ein KTL-Bad hergestellt mit den Badwerten:

| | |
|---|---|
| Festkörpergehalt | 14.5 % |
| pH-Wert (20°C) | 5.9 |
| $MEQ_s$-Wert | 52 mmol Säure/100 g Festharz |
| Leitfähigkeit | 1250 µS · $cm^{-1}$ |

Aus dem KTL-Bad werden Stahlbleche analog Beispiel 9 beschichtet und 30 Minuten bei 140°C gehärtet.
Die Trockenfilmstärke beträgt 16 bis 18 µm.
Die Lackfilme sind glatt, hart und elastisch.
Die Salzsprühtestergebnisse sind in Tabelle 3 angegeben.

Beispiel 11

Ein KTL-Bad wird, wie im Beispiel 8 beschrieben, hergestellt aus·

280 g Bindemittel »A 3« , 200 g Bindemittel »A 2« , 12.5 g Alcophor® 827 (Zinkcyanurat als Katalysator, Handelsprodukt), 24.5 g mikronisiertes Zinkphosphat, 126 g Titandioxid, 1.5 g Ruß, 15 g Aluminiumsilikat, 81 g Vernetzungsmittel »B 2« , 15 g Eisessig und 2244.5 g voll entsalztem Wasser.
Die Beschichtung von Stahlblechen wird analog Beispiel 8 durchgeführt. Eingebrannt wird 30 Minuten 150°C.
Die Trockenfilmdicke beträgt 16 bis 18 µm.
Die Salzsprühtestergebnisse sind in Tabelle 3 angegeben.

T a b e l l e   1

Erichsen Tiefung und MEK - Beständigkeit

| | Einbrennbedingungen | | Erichsen Tiefung | MEK - Rubs * |
|---|---|---|---|---|
| | Einbrennzeit (Min) | Einbrenntemp. (°C) | (mm) | |
| Beispiel 1 | 60 | 110 | 0.8 | 18 |
| Beispiel 2 | 60 | 110 | 0.5 | 16 |
| Beispiel 3 | 60 | 110 | 1.1 | 25 |
| Beispiel 1 | 60 | 120 | 7.3 | >100 |
| Beispiel 2 | 60 | 120 | 6.7 | >100 |
| Beispiel 3 | 60 | 120 | 9.1 | >100 |
| Beispiel 1 | 60 | 130 | 7.4 | >100 |
| Beispiel 2 | 60 | 130 | 6.8 | >100 |
| Beispiel 3 | 60 | 130 | 9.1 | >100 |
| Beispiel 1 | 60 | 140 | 7.5 | >100 |
| Beispiel 2 | 60 | 140 | 6.8 | >100 |
| Beispiel 3 | 60 | 140 | 9.2 | >100 |

* Anzahl der mit einer mit Methylethylketon getränkter Watte unter 1 kg Belastung durchgeführten Doppelhübe bis zu einem sichtbaren Angriff des Films

## T a b e l l e 2

Mechanische Werte (Pendelhärte, Gitterschnittprüfung, Erichsen Tiefung) und MEK-Beständigkeit

| | Einbrennbedingungen | | Mechanische Werte | | | |
|---|---|---|---|---|---|---|
| | Einbrennzeit (Min) | Einbrenntemp. ($^{o}C$) | Pendelhärte (sec) | Gitterschnitt Note | Erichsen Tiefung (mm) | MEK-Rubs |
| Beispiel 4 | 60 | 110 | 165 | 1 | 0.2 | 15 |
| Vergleichsversuch 1 | 60 | 110 | 87 | 1-2 | 0.1 | 10 |
| Beispiel 4 | 60 | 120 | 196 | 1 | 7.3 | >100 |
| Vergleichsversuch 1 | 60 | 120 | 103 | 1-2 | 8.1 | 60 |
| Beispiel 4 | 60 | 130 | 200 | 2 | 8.1 | >100 |
| Vergleichsversuch 1 | 60 | 130 | 125 | 1 | 8.1 | 100 |
| Beispiel 5 | 60 | 120 | 192 | 2 | 8.3 | >100 |
| Beispiel 5 | 26 | 150 | 196 | 2 | 8.3 | >100 |
| Beispiel 6 | 60 | 150 | 157 | 1 | 8.2 | >100 |
| Beispiel 7 | 30 | 145 | 181 | 0-1 | 8.3 | >100 |

Tabelle 3

Salzsprühtestergebnisse nach DIN 50021 und DIN 53167

| Beispiel | Substrat | Salzsprühtest | |
|---|---|---|---|
| | | Belastungsdauer (h) | Unterwanderung am Schnitt (mm) |
| 8 | Stahlblech | 240 | 0.9 - 1.1 |
| 8 | Bonder 132 | 504 | 0.6 - 0.8 |
| 9 | Stahlblech | 240 | 1.2 - 1.4 |
| 9 | Bonder 132 | 504 | 0.5 - 0.8 |
| 10 | Stahlblech | 240 | 0.8 - 1.0 |
| 10 | Bonder 132 | 504 | 0.4 - 0.5 |
| 11 | Stahlblech | 240 | 0.6 - 0.8 |
| 11 | Bonder 132 | 504 | 0.4 - 0.6 |

In der eingangs erwähnten DE-A-33 24 211 ist in Zusammenhang mit den Polyglycidylethern erwähnt, daß diese mit ungesättigten Monocarbonsäuren umgesetzt werden können, ehe sie mit einem Vernetzungsmittel auf der Basis von Michael-Addukten zu einer Bindemittelmischung verarbeitet werden. Dies gehörte schon damals zum Stand der Technik. Als Beispiele für solche ungesättigten Monocarbonsäuren sind in DE-A-33 24 211, Seite 15, Zeile 12 und 16 genannt Leinölfettsäure und dimere Fettsäuren. Es handelt sich hierbei um Verbindungen, die die ethylenischen Doppelbindungen in der Mitte der Kette enthalten, jedoch nicht end- oder seitenständig, wie gemäß der vorliegenden Erfindung gefordert. Hierin liegt ein fundamentaler Unterschied, insbesondere hinsichtlich der erzielten Effekte. Nur dann, wenn die Kunstharz-Bindemittelkomponente A

gemäß der Erfindung - neben den sonstigen Parametern - die seiten- oder end-Doppelbindungen enthält, erzielt man den überraschenden und außerordentlich interessanten und wertvollen Effekt, daß bei relativ niedriger Einbrenntemperatur eine erstaunlich gute Vernetzungsreaktion eintritt, wie die Beispiele der vorliegenden Anmeldung beweisen.

Dieser Effekt tritt bei Verwendung der Polyglycidylether der DE-A-33 24 211 nicht ein, auch wenn diese - entgegen den darin enthaltenen Beispielen - ungesättigte Monocarbonsäuren eingebaut enthalten. In den Beispielen der DE-A-33 24 211 wird überhaupt keine ungesättigte Monocarbonsäure in den Polyglycidylethern verwendet. Bevorzugt sind gemäß der DE-A-33 24 211 in Übereinstimmung mit dem allgemeinen Stand der Technik gesättigte Polyglycidylether. Die ungesättigten Monocarbonsäuren werden mehr oder weniger am Rande genannt. In der DE-A-33 24 211, Seite 15, Zeile 4 wird auch ausdrücklich darauf hingewiesen, daß solche Verbindungen "zur Steuerung der Filmeigenschaften" eingebaut werden. Über eine Steuerung der Vernetzungsreaktion ist nichts gesagt.

Mit den Vergleichsversuchen 2 und 3 wird dies bestätigt. Da, wie bereits ausgeführt, die Beispiele der DE-A-33 24 211 nicht unter Verwendung von ungesättigten Grundharzen (A) arbeiten, konnten sie nicht identisch nachgearbeitet werden. Es wurde aber ein Beispiel der vorliegenden Anmeldung dahingehend abgewandelt, daß anstelle des ungesättigten Bindemittels (A), wie es gemäß der vorliegenden Anmeldung gefordert wird, ein ungesättigtes Bindemittel gemäß der Beschreibung der DE-A-33 24 211 eingesetzt wurde, wobei als ungesättigte Säure die Leinölfettsäure mit Epoxidverbindungen umgesetzt wurde. Der Vergleichsversuch beweist, daß der gemäß der Erfindung geforderte Effekt dann nicht eintritt.

Vergleichsversuch 2

Herstellung eines Bindemittels analog DE-A-33 24 211 unter Verwendung von Leinölfettsäure.

a) Es wurde gemäß dem obigen Herstellungsbeispiel A2) ein ungesättigtes Bindemittel hergestellt, wobei jedoch 2436 g Leinölfettsäure statt 2454 g eines Halbesters aus Tetrahydrophthalsäureanhydrid und Hydroxyethylmethacrylat eingesetzt wurden. Das erhaltene Bindemittel hat eine Hydrierjodzahl von 63.7.

b) Unter Verwendung dieses Bindemittels wurde, wie in Beispiel 6 im einzelnen beschrieben, ein KTL-Bad hergestellt, und damit wurden Stahlbleche beschichtet.

Vergleichsversuch 3

15o g Bindemittel von Vergleichsversuch 2a, 479 g Bindemittel »A6«, 25 g Ethoxypropanol, 1.5 g Ruß und 145 g Titandioxid werden unter einem schnell laufenden Dissolver vermischt und auf einer Perlmühle vermahlen. Mit 159 g Vernetzungsmittel »B1«, 22 g Bleioctoat (Bleigehalt 31%), 2o.5 g Ameisensäure, 5o%ig, und 2998 g voll entsalztem Wasser wird ein KTL-Bad hergestellt.

Aus den KTL-Bädern der Vergleichsversuche 2 und 3 sowie von Beispiel 6 wurden Stahlbleche wie üblich beschichtet und 6o Minuten bei 14o°C eingebrannt.
Die Trockenfilmdicke beträgt 16 bis 18 µm.
Die Salzsprühtestergebnisse sind in der nachfolgenden Tabelle angegeben.

TABELLE 4

Salzsprühtestergebnisse nach DIN 50021 und DIN 53167

| Beispiel | Substrat | Salzsprühtest Belastungsdauer (h) | Salzsprühtest Unterwanderung am Schnitt (mm) |
|---|---|---|---|
| 6 | Stahlblech | 240 | 0.8 - 0.9 |
| Vergleichsversuch 2 | " | 240 | 4.5 - 5.0 |
| Vergleichsversuch 3 | " | 240 | 3.3 - 4.1 |

# 0 212 633

T 31 512 19. August 1985

Kathodisch abscheidbares wäßriges Elektrotauchlack-Überzugsmittel

## Patentansprüche

1. Kathodisch abscheidbares wäßriges Elektrotauchlack-Überzugsmittel, das ein oder mehrere Kunstharz-Bindemittel mit Aminogruppen enthält, welche durch Protonisieren mit Säuren wasserlöslich gemacht werden können, und das gegebenenfalls Pigmente, Korrosionsinhibitoren, Antikratermittel, Lackhilfsmittel, Katalysatoren und organische Lösungsmittel enthält, dadurch gekennzeichnet, daß es als Kunstharz-Bindemittel enthält

   A) 50 bis 95 % Massenanteil, bezogen auf den Gesamtanteil des Kunstharz-Bindemittels, von einem oder mehreren Polykondensations-, Polymerisations- und/oder Polyadditionsharzen, wobei das Harz oder im Falle des Vorliegens mehrer Harze deren Gemisch

      a) ein mittleres Molekulargewicht ($\overline{Mn}$) von 700 bis 10 000 hat,

      b) $1.2 \cdot 10^{23}$ bis $21.7 \cdot 10^{23}$ seiten- oder endständige Doppelbindungen pro 1000 g enthält, entsprechend einer Hydrierjodzahl von 5 bis 90,

      c) primäre und/oder sekundäre Hydroxylgruppen enthält, entsprechend einer Hydroxylzahl von 30 bis 450, und

      d) eine Aminzahl von 30 bis 150 aufweist,

B) 5 bis 50 % Massenanteil eines oder mehrerer Vernetzungsmittel, die Michael- Additionsprodukte von zur Michael- Addition befähigten Mono- oder Dicarbonsäureester an Verbindungen sind, welche mindestens eine zur Michael- Addition befähigte Doppelbindung enthalten, und die pro Molekül im Mittel

a) entweder mindestens eine umesterungs- bzw. umamidierungsfähige Estergruppe und mindestens eine ethylenische Doppelbindung oder

b) mindestens zwei umesterungs- bzw. umamidierungsfähige Estergruppen enthält, und

C) lösliche und/oder unlösliche Umesterungskatalysatoren für die thermische Vernetzung von (A) und (B) bei Temperaturen über 100°C.

2. Überzugsmittel nach Anspruch 1, dadurch gekennzeichnet, daß das in Komponente (A) enthaltene Amino-1,2-Epoxidharz oder im Falle des Vorliegens mehrerer Amino-1,2-Epoxidharze deren Gemisch aus Bisphenol A- Epoxidharzen hergestellt ist.

3. Überzugsmittel nach Anspruch 2, dadurch gekennzeichnet, daß das in Komponente (A) enthaltene Amino-1,2-Epoxyharz oder im Falle des Vorliegens mehrerer Amino-1,2-Epoxyharze deren Gemisch ein mittleres Molekulargewicht ($\overline{Mn}$) von 1500 bis 5000 aufweist.

4. Überzugsmittel nach einem oder mehreren der Ansprüche 1 bis 3, dadurch gekennzeichnet, daß das in Komponente (A) enthaltene Amino-1,2-Epoxyharz oder im Falle des Vorliegens mehrerer Amino-1,2-Epoxyharze deren Gemisch eine Hydrierjodzahl von 10 bis 75, vorzugsweise von 10 bis 60 aufweist.

5. Überzugsmittel nach einem oder mehreren der Ansprüche 1 bis 4, dadurch gekennzeichnet, daß das in Komponente (A) enthaltene Amino-1,2-Epoxyharz oder im Falle des Vorliegens mehrerer Amino-1,2-Epoxyharze deren Gemisch eine Hydroxylzahl von 80 bis 400, vorzugsweise von 120 bis 350 aufweist.

6. Überzugsmittel nach einem oder mehreren der Ansprüche 1 bis 5, dadurch gekennzeichnet, daß das in Komponente (A) enthaltene Amino-1,2-Epoxyharz oder im Falle des Vorliegens mehrerer Amino-1,2-Epoxyharze deren Gemisch eine Aminzahl von 40 bis 90 aufweist.

7. Überzugsmittel nach einem oder mehreren der Ansprüche 1 bis 6, dadurch gekennzeichnet, daß die Komponente (B) Michael-Addukte von Alkylestern mit 1 bis 8 C-Atomen in der Alkylgruppe der Acetessigsäure, Malonsäure und/oder Cyanessigsäure sind.

8. Überzugsmittel nach einem oder mehreren der Ansprüche 1 bis 7, dadurch gekennzeichnet, daß die Komponente (C) aus Bleioctoat, -silikat und/oder -naphthenat besteht.

9. Verwendung des Überzugsmittels nach Anspruch 1 zur kathodischen Abscheidung aus einem Lackbad auf elektrisch leitenden Oberflächen.